# EUROPÄISCHE PATENTANMELDUNG

(11) **EP 3 305 691 A1**
(43) Veröffentlichungstag der Anmeldung: **11.04.2018**
(21) Anmeldenummer: 16192726.4
(22) Anmeldetag: 07.10.2016
(51) Int. Cl.: B65G 47/52, B65G 47/53, B65G 47/54

(54) **FÖRDERSYSTEM MIT FÜHRUNGSVORRICHTUNG**

(71) Anmelder: Siemens Aktiengesellschaft, 80333 München (DE)
(72) Erfinder: ASCHPURWIS, Carsten, 78464 Konstanz (DE); HAHN, Sebastian, 91350 Gremsdorf (DE)
(74) Vertreter: Maier, Daniel Oliver

(57) **Zusammenfassung**

Die Erfindung offenbart ein Fördersystem (2) zum kontrollierten Übergeben von einem Stückgut (4) von einer Zuführförderstrecke (6) mit einer Zuführförderrichtung (106) auf eine Einschleusförderstrecke (8) mit einer Einschleusförderrichtung (108). Die Zuführförderstrecke (6) mündet innerhalb eines Übergabebereichs (16) in einem Winkel in die Einschleusförderstrecke (8) und ist oberhalb der Einschleusförderstrecke (8) angeordnet. Das Fördersystem umfasst eine Führungsvorrichtung (18) als Auflage für eine Seite entlang einer Kante des Stückguts (4) und ist in ihrer Länge entlang der Zuführförderrichtung (106) ausgerichtet und oberhalb der Einschleusförderstrecke (8), auf einer der Einschleusförderrichtung (108) abgewandten Seite des Übergabebereichs (16) angeordnet.

Die Erfindung offenbart ein Verfahren zum kontrollierten Übergeben eines Stückguts (4) von der Zuführförderstrecke (6) auf die Einschleusförderstrecke (8).

## Beschreibung

Die vorliegende Erfindung betrifft das technische Gebiet der Fördersysteme für Stückgüter, beispielsweise Pakete und Gepäckstücke.

In Fördersystemen müssen Stückgüter, insbesondere Postsendungen, beispielsweise Pakete, Gepäckstücke und Luftfrachtgüter, häufig optimal positioniert in einer bestimmten Orientierung vorliegen. Es ist daher vorteilhaft, eine bereits erzielte Ausrichtung eines Stückguts bei einem Übergeben von einer ersten Förderstrecke auf eine zweite Förderstrecke zu erhalten. Im Postsortierbereich ist dies besonders wichtig zum optimalen Einschuss von Paketen von einer Einschleusförderstrecke auf die Schalen eines Tilt-Tray- oder Crossbelt-Sorters, welche typischerweise in einem Winkel von 30° relativ zur Einschleusförderstrecke angeordnet sind. Bei nicht optimaler Ausrichtung eines Paketes auf der Einschleusförderstrecke belegt das Paket dann mehr als eine Schale, was die Sortierleistung der Anlage verringert. Darüber hinaus kann das Paket zwischen den Spalten der Schalen eingeklemmt werden, was zu einer Beschädigung des Pakets und/ oder eines Ausfalls der Anlage führen kann.

Die bekannten und im Bereich von Crossbelt-Sortern angewandten Lösungen sind aufwendig und zielen darauf ab, auf unterschiedliche Weise eine aufgrund der unterschiedlichen Transportrichtungen auftretende Verdrehung des Stückguts zu erzeugen und im Anschluss eine Verdrehung zu verhindern bzw. zu minimieren, um eine optimale, da platzsparende und gutschonende Belegung des Carriers zu erzielen. Eine optimale Positionierung des Stückguts wird bereits auf einer Zuführförderstecke erreicht, die in einem bestimmten Winkel die Einschleusförderstrecke mündet, und eine Bewahrung dieser optimalen Positionierung während des Übergebens. Dies kann erreicht werden, indem die Haftung zwischen Förderstrecke und Stückgut während des Übergebens variiert wird. DE 10 2010 035 126 A1 offenbart einen kontrollierten Transport des Stückguts auf der Einschleusförderstrecke mit überlagerten, auf Fördergeschwindigkeit und Förderrichtung der Zuführförderstrecke und der übernehmenden Förderstrecke abgestimmten Geschwindigkeitskomponenten. Das Stückgut wird beim Überführen von einer transmittierenden schrägen Platte unterstützt.

Diese Lösungen können jedoch nicht immer zuverlässig sicherstellen, dass die Ausrichtung der Stückgüter bewahrt wird und sind darüber hinaus aufwendig in ihrer technischen Realisierung.

Der vorliegenden Erfindung liegt daher die Aufgabe zugrunde, ein verbessertes und technisch einfach ausführbares Fördersystem zu ermöglichen, auf welchem ein Stückgut von einer ersten Förderstrecke auf eine zweite Förderstrecke im Wesentlichen ohne Veränderung seiner Ausrichtung übergebbar ist. Diese Aufgabe wird durch die in den unabhängigen Ansprüchen beschriebenen Lösungen gelöst.

Die erfindungsgemäße Lösung sieht ein Fördersystem zum kontrollierten Übergeben von einem Stückgut, beispielsweise einer Postsendung, von einer Zuführförderstrecke auf eine Einschleusförderstrecke vor, wobei die Zuführförderstrecke innerhalb eines Übergabebereichs in einem Winkel in die Einschleusförderstrecke mündet und oberhalb der Einschleusförderstrecke angeordnet ist und die Zuführförderstrecke eine Zuführförderrichtung und die Einschleusförderstrecke eine Einschleusförderrichtung aufweist. Vom Fördersystem ist eine Führungsvorrichtung umfasst, welche als Auflage für eine Seite entlang einer Kante des Stückguts ausgestaltet ist und in ihrer Länge im Wesentlichen entlang der Zuführförderrichtung ausgerichtet ist und oberhalb der Einschleusförderstrecke, auf einer der Einschleusförderrichtung abgewandten Seite des Übergabebereichs angeordnet ist.

Damit das Stückgut möglichst einfach unkompliziert ohne Ausüben von Arbeit gegen die Schwerkraft übergeben wird, sondern auf einer Höhe oder abschüssig, kann die Führungsvorrichtung auf Höhe oder unterhalb der Zuführförderstrecke angeordnet sein.

Gemäß einer Ausführungsform kann die Zuführförderstrecke und die Führungsvorrichtung ausgestaltet sind, das Stückgut oberhalb der Einschleusförderstrecke zu tragen, während es zumindest noch teilweise auf der Zuführförderstrecke aufliegend entlang der Zuführförderrichtung transportiert wird. Auf diese Weise kommt das Stückgut auf der Zuführförderstrecke und auf der Führungsvorrichtung aufliegend nicht in Kontakt mit der Einschleusförderstrecke bis es optimal oberhalb der Einschleusförderstrecke positioniert ist, wodurch eine Veränderung der Ausrichtung durch gleichzeitigen Kontakt mit Zuführförderstrecke und Einschleusförderrichtung erfolgen könnte.

Um ein möglichst leichtes Abkippen des Stückguts zum Übergeben zu ermöglichen und um einen noch abrupteren Transportrichtungswechsel - zunächst entlang der Zuführförderrichtung und dann entlang der Einschleusförderrichtung - zu erzielen, kann die Führungsvorrichtung auf ihrer der Einschleusförderrichtung zugewandten Seite eine Abkippvorrichtung umfassen.

Um ein noch mehr erleichtertes und ein noch schonenderes Abkippen besonders einfach zu erzielen, kann die Abkippvorrichtung abgerundet ausgestaltet sein.

Um nach dem Abkippen einen Transport des Stückguts entlang der Einschleusförderrichtung zu erleichtern, kann die Abkippvorrichtung Transportrollen umfassen, die mit einer Laufrichtung entlang der Einschleusförderrichtung angeordnet sind. So kann die Abkippvorrichtung zugleich ein schonendes Abkippen ermöglichen, als auch einen Transport entlang der Einschleusförderrichtung begünstigen.

Gemäß einer weiteren Ausführungsform kann die Führungsvorrichtung eine statische Gleitleiste umfassen. Die Gleitleiste ist eine besonders unkomplizierte Ausgestaltung und erlaubt es, das Stückgut ohne zusätzliches Antriebsmittel weiter entlang der Zuführförderrichtung zu transportieren, solange es noch auf der Zuführförderstrecke aufliegt.

Um auch Stückgüter, insbesondere Stückgüter welche nicht allzu gut auf der Führungsvorrichtung gleiten, noch besser entlang der Zuführförderrichtung auf der Führungsvorrichtung aufliegend zu transportieren, kann die Führungsvorrichtung ein entlang der Zuführförderrichtung antreibbares Antriebsmittel, beispielsweise ein Transportband, umfassen.

Um eine noch bessere Ausrichtung des Stückguts während des Übergabevorgangs zu erzielen, kann die Führungsvorrichtung auf ihrer der Einschleusförderrichtung abgewandten Seite einen orthogonal zu Einschleusförderrichtung und Zuführförderrichtung angeordneten Führungsanschlag umfassen, an welchem das Stückgut anliegen kann.

Hinsichtlich eines Verfahrens wird die vorstehend genannte Aufgabe gelöst durch ein Verfahren zum kontrollierten Übergeben eines Stückguts von einer Zuführförderstrecke auf eine Einschleusförderstrecke, wobei die eine Zuführförderrichtung aufweisende Zuführförderstrecke innerhalb eines Übergabebereichs in einem Winkel in die eine Einschleusförderrichtung aufweisende Einschleusförderstrecke mündet und innerhalb des Übergabebereichs oberhalb der Einschleusförderstrecke angeordnet ist. Das Verfahren umfasst die Verfahrensschritte:
a) Transportieren eines auf der Zuführförderstrecke aufliegenden Stückguts entlang der Zuführförderrichtung;
b) Unterstützen des Stückguts auf einer ersten, der Einschleusförderrichtung abgewandten Seite an zwei oder mehr Punkten und auf einer der Einschleusförderrichtung zugewandten Seite an mindestens einem Punkt während des Transportierens entlang der Zuführförderrichtung; und
c) Transportieren des zumindest teilweise oberhalb der Einschleusförderstrecke positionierten Stückguts entlang der Zuführförderrichtung.

Gemäß einer weiteren Ausführungsform kann ein Abkippen des Stückguts um eine parallel zur Zuführförderrichtung und oberhalb der Einschleusförderstrecke angeordnete Drehachse und ein Transportieren des Stückguts entlang der Einschleusförderrichtung auf der Einschleusförderstrecke erfolgen. Auf diese Weise erfährt das Stückgut erst dann eine Kraft entlang der Einschleusförderrichtung, wenn es nicht mehr vollständig auf der Zuführförderrichtung aufliegt.

Um das Stückgut mit nur wenig Aufwand möglichst weit in Zuführförderrichtung oberhalb der und ohne Kontakt mit der Einschleusförderstrecke zu positionieren, kann das Fördersystem eine auf Höhe der Zuführförderstrecke oder oberhalb der Einschleusförderstrecke positionierte Führungsvorrichtung zum Unterstützen des Stückguts auf seiner ersten, der Einschleusförderrichtung abgewandten Seite an zwei oder mehr Punkten umfassen, welche in ihrer Länge im Wesentlichen entlang der Zuführförderrichtung ausgerichtet ist und oberhalb der Einschleusförderstrecke, auf einer der Einschleusförderrichtung abgewandten Seite des Übergabebereichs angeordnet ist.

Damit das Stückgut besonders leicht und schonend auf die Einschleusförderstrecke übergeben wird, kann die Führungsvorrichtung auf ihrer der Einschleusförderrichtung zugewandten Seite eine Abkippvorrichtung umfassen.

Damit das Stückgut nicht nur aufgrund seiner Auflage auf der Zuführförderstrecke entlang der Zuführförderrichtung transportiert wird, kann das Stückgut aktiv durch die Führungsvorrichtung entlang der Zuführförderrichtung transportiert werden. Außerdem wird das Stückgut so noch stabiler oberhalb der Einschleusförderstrecke gehalten.

Gemäß einer weiteren Ausführungsform kann das Stückgut auf der Führungsvorrichtung entlang der Zuführförderrichtung gleiten. So kann das Stückgut ohne zusätzliche Antriebsmittel auf der Führungsvorrichtung aufliegend entlang der Zuführförderrichtung transportiert werden.

Weitere Ausführungsformen der Erfindung werden nachfolgend anhand der Figuren beispielsweise näher erläutert. Dabei zeigen:
- Figur 1: einen Vergleich zwischen einer Stückgutübergabe mit und ohne Ausrichtungskontrolle;
- Figur 2: schematisch ein erfindungsgemäßes Fördersystem in der Aufsicht;
- Figur 3: einen Querschnitt eines erfindungsgemäßen Fördersystems vor einem Abkippen des Stückguts;
- Figur 4: das Fördersystem von Figur 3 nach Abkippen des Stückguts;
- Figur 5: ein Fördersystem im Querschnitt nach Abkippen des Stückguts wie in Figur 4 mit alternativ ausgestalteter Führungsvorrichtung; und
- Figur 6: ein Fördersystem mit einer Transportrollen umfassenden Abkippvorrichtung.

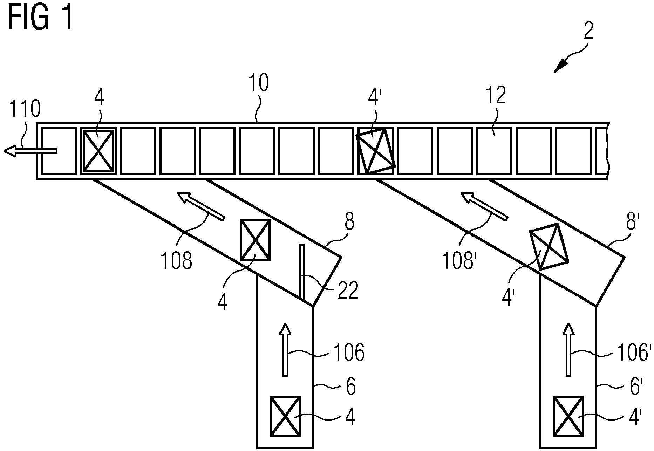

Figur 1 zeigt vergleichend eine Aufsicht auf eine Stückgutübergabe in einem Fördersystem 2 mit Ausrichtungskontrolle wie sie gemäß einer Ausführungsform der Erfindung durchführbar ist und ohne Ausrichtungskontrolle. Das Fördersystem 2 ist in der Art eines in Postsortieranlagen verwendeten Crossbelt-Sorters ausgestaltet und umfasst eine Zielförderstrecke 10, auf denen die Stückgüter 4 auf Trageeinheiten 12 eingeschossen und entlang einer Zielförderrichtung 110 transportiert werden. Die Trageeinheiten 12 sind zur Aufnahme eines Stückguts 4 ausgestaltet, beispielsweise als Schalen. Damit die Stückgüter 4 nicht zwischen zwei Trageeinheiten 12 eingeklemmt werden und damit eine optimale Auslastung der Sortieranlage erfolgt, müssen die Stückgüter 4 optimal auf die Schalen eingeschossen werden, im vorliegenden Fall also so wie anhand des Stückguts 4 auf der linken Zuführförderstrecke 6 und Einschleusförderstrecke 8, welches um etwa 30° gegen die Zuführförderrichtung verdreht ist.

Das Fördersystem umfasst Zuführförderstrecken 6, 6`, Einschleusförderstrecken 8, 8' und Das optimale Einschießen wird erreicht bei einer im Wesentlichen parallelen Anordnung einer Kante des Stückguts 4 und einer Kante der Trageeinheiten 12, welche parallel zur übernehmenden Förderrichtung 110 angeordnet sind. Das Stückgut wird also im Wesentlichen parallel zur übernehmenden Förderrichtung 110 ausgerichtet. In Postsortieranlagen sind die Stückgüter 4 Pakete oder Postsendungen, prinzipiell eignet sich das Fördersystem 2 auch für andersartig ausgestaltete Stückgüter 4 wie Kisten, Behälter, Getränkekisten oder sonstiges Fördergut.

Von zwei Zuführförderstrecken 6, 6' werden die Stückgüter 4 jeweils über Einschleusförderstrecken 8, 8' auf eine gemeinsame übernehmende Förderstrecke 10 transportiert. Die Einschleusförderstrecken 8, 8' münden in einem Winkel, hier spitzwinklig, in die übernehmende Förderstrecke 10. Die Förderstrecken 6, 8, 10 weisen jeweils eigene Förderrichtungen 106, 108, 110 auf. Anhand der rechten Zuführförderstrecke 6' und Einschleusförderstrecke 8` sowie dem Stückgut 4` ist zur Verdeutlichung der Einschussproblematik ein nicht optimales Einschießen ohne Einsatz der Vorrichtung 2 dargestellt. Bei als Gurt- oder Riemenförderer ausgestalteter Zuführförderstrecke 6' und Einschleusförderstrecke 8' entsteht bei Übergabe des Stückguts 4` von der Zuführförderstrecke 6' auf die Einschleusförderstrecke 8` Reibung, da das Stückgut 4` zwangsweise über den Gurt der Einschleusförderstrecke 8` rutscht. Die entstehende Reibung ist bei unregelmäßigem Fördergut wie im Paketsortiergeschäft üblich, nur schwer beherrschbar, da Einflussfaktoren wie Gewichtsverteilung, Oberflächenbeschaffenheit, Masse, Form, Konvexität, etc. Einfluss auf das Rutschverhalten haben. Bei höheren Leistungen und Geschwindigkeiten wird die Ausrichtungsgenauigkeit immer schlechter und die Sortierleistung der Sortieranlage wird geringer.

Das Stückgut 4 ist bereits auf der Zuführförderstrecke 6 optimal ausgerichtet. Diese optimale Ausrichtung wird beim Übergeben auf die Einschleusförderstrecke 8 erfindungsgemäß bewahrt mit Hilfe einer Führungsvorrichtung 18, die mindestens im Bereich und oberhalb der Einschleusförderstrecke 8 direkt an die Zuführförderstrecke 6 angrenzend angeordnet, so dass das Stückgut 4 erst während des Übergabeprozesses mit der Führungsvorrichtung 18 in Kontakt kommt. Eine Aufgabe der Erfindung ist es, das Stückgut 4 kontrolliert ohne Veränderung seiner Ausrichtung von der Zuführförderstrecke 6 auf die Einschleusförderstrecke 8 zu übergeben.

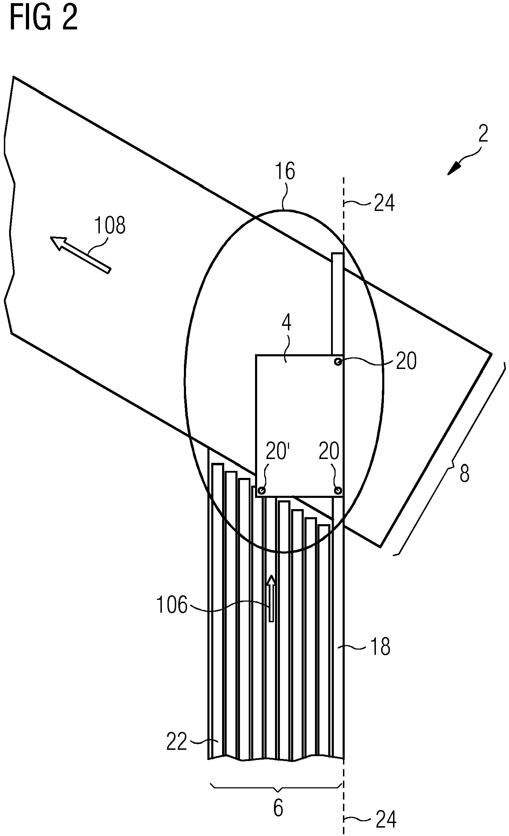

Figur 2 zeigt schematisch ein Fördersystem 2, umfassend eine Zuführförderstrecke 6, eine Einschleusförderstrecke 8 und eine Führungsvorrichtung 18, zum kontrollierten Übergeben von einem Stückgut 4 von der Zuführförderstrecke 6 auf die Einschleusförderstrecke 8 gemäß einer Ausführungsform der Erfindung. Die Zuführförderstrecke 6 mündet innerhalb eines Übergabebereichs 16 in einem Winkel in die Einschleusförderstrecke 8 und ist oberhalb der Einschleusförderstrecke 8 angeordnet. Die Zuführförderstrecke 6 umfasst Streifenförderbänder 22, die von einer gemeinsamen oder von unterschiedlichen Wellen angetrieben werden können, zum Transport des Stückguts 4, wobei der Übergang zur Einschleusförderstrecke 8 als Streifenmerger ausgestaltet ist und die Zuführförderstrecke 6 oberhalb der Einschleusförderstrecke 8 angeordnet ist, wobei der Höhenunterschied wenige mm aber auch einige cm betragen kann.

Das Stückgut 4 wurde zunächst entlang einer physisch nicht ausgebildeten Referenzkante 24, die in der zeichnerischen Aufsicht auf der rechten Seite der Zuführförderstrecke 6 und entlang der Zuführförderrichtung 106 angeordnet ist, ausgerichtet. Die Führungsvorrichtung 18 ist entlang der Referenzkante 24 und oberhalb der Einschleusförderstrecke 8 auf einer der Einschleusförderrichtung 108 abgewandten Seite des Übergabebereichs 16 angeordnet und erstreckt sich zudem über den gesamten abgebildeten Bereich der Zuführförderstrecke 6. Durch die Streifenförderbänder 22 angetrieben wurde das Stückgut 4 zunächst auf der Zuführförderstrecke 6 und entlang einer Kante auf der Führungsvorrichtung 18 aufliegend entlang der Zuführförderrichtung 106 und in den Übergabebereich 16 hinein transportiert. Nur ein geringer Teil der Unterseite des Stückguts 4 liegt auf der Führungsvorrichtung 18 auf. Innerhalb des Übergabebereichs 16 wird das Stückgut 4 stabil oberhalb der Einschleusförderstrecke 8 gehalten mit zwei oder mehr Auflagepunkten 20 auf der Führungsvorrichtung 18 und mindestens einem auf der hinteren Seite des Stückguts 4 positionierten Auflagepunkt 20' auf der Zuführförderstrecke 6. Diese Dreipunktlange mit in einer Zuführförderebene 26 oberhalb der Einschleusförderstrecke 8 angeordneten Auflagepunkten 20, 20' ermöglicht eine für eine Übergabe optimale Positionierung des Stückguts 4 oberhalb der Einschleusförderstrecke 8 ohne Auflage auf ebendieser und somit ohne Übertragung der Einschleusförderrichtung 108 während das Stückgut 4 noch entlang der Zuführförderrichtung 106 transportiert wird. Die Dreipunktlage ermöglicht ein hinreichend langes Aufliegen des Stückguts 4 auf der Führungsvorrichtung 18 und der Zuführförderstrecke 6. Erst wenn das Stückgut 4 die Zuführförderstrecke 6 verlassen hat, wenn also der Auflagepunkt 20' nicht mehr auf der Zuführförderstrecke 6 aufliegt, kippt das Stückgut 4 um die Führungsvorrichtung 18 nach unten ab. Die Führungsvorrichtung 18 unterstützt die Auflagepunkte 20 auf der der Einschleusförderrichtung 108 abgewandte Seiten des Stückguts 4 so lange, bis das Stückgut 4 mit seiner gesamten, der Einschleusförderrichtung 108 zugewandten Seite oberhalb der Einschleusförderstrecke 8 positioniert ist.

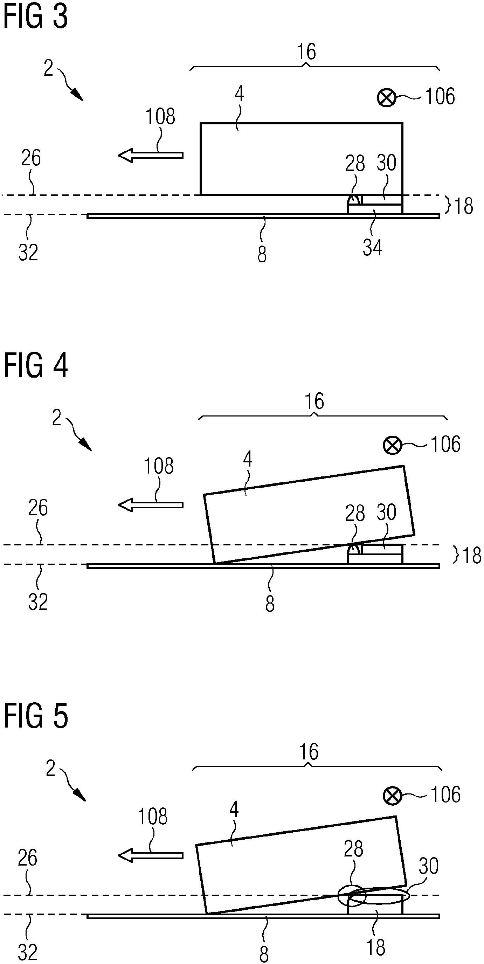

Figur 3 zeigt einen Querschnitt eines Fördersystems 2 mit einem Stückgut 4 welches mit Hilfe der Führungsvorrichtung 18 im Übergabebereich 16 oberhalb der Einschleusförderstrecke 8 gehalten wird gemäß einer weiteren Ausführungsform der Erfindung. Das Stückgut 4 liegt wie in Figur 2 dargestellt in Dreipunktlage auf sowohl der Führungsvorrichtung 18 als auch auf der hier nicht gezeigten Zuführförderstrecke 6 auf. Die Unterseite des Stückguts 4 und somit auch die Auflagepunkte 20, 20' befinden sich in der gestrichelt dargestellten Zuführförderebene 26. Das Stückgut 4 wird entlang der Zuführförderrichtung 106 in die Bildebene hinein transportiert werden und soll nach erfolgter Übergabe auf der Einschleusförderstrecke 8 entlang der Einschleusförderrichtung 108 in einer Einschleusförderebene 32, in der zeichnerischen Darstellung nach links, transportiert werden. So lange das Stückgut 4 durch seine Auflagepunkte 20, 20' stabil auf der Führungsvorrichtung 18 und auf der Zuführförderstrecke 6 aufliegt und entlang der Zuführförderrichtung 106 transportiert ist, besteht keine Wechselwirkung mit der Einschleusförderstrecke 8 und keinerlei Übertragung der Einschleusförderrichtung 108, der Transportrichtung der Einschleusförderstrecke 8, auf das Stückgut 4. Da kein gleichzeitige Transport entlang zweier unterschiedlicher Transportrichtungen stattfindet, wird bis hierhin die Ausrichtung des Stückguts 4 nicht verändert.

Die Führungsvorrichtung 18 umfasst eine Abkippvorrichtung 28 und eine Auflagevorrichtung 30 die zum Tragen des Stückguts 4 ausgestaltet sind sowie einen Führungsvorrichtungskörper 34. Die Auflagevorrichtung 30 ist als Förderband zum aktiven Transport des Stückguts 4 ausgestaltet. Die Abkippvorrichtung 28 ist parallel zur Zuführförderrichtung 106, oberhalb der Einschleusförderstrecke 8 und auf Höhe, alternativ auch leicht unterhalb der Zuführförderstrecke 6 bzw. Zuführförderebene 26 angeordnet. Wenn die Auflagevorrichtung 30 als Gleitleiste ohne aktiven Antrieb ausgestaltet ist, ist eine gemeinsame Ausführung von Abkippvorrichtung 28 und Auflagevorrichtung 30 mit minimierten Störkonturen wie in Figur 5 dargestellt ebenfalls vorteilhaft. Eine Ausgestaltung der Auflagevorrichtung 30 als Gleitleiste umfasst weniger bewegte Teile und Lager und ist daher besonders einfach in Bau und unkompliziert in der Wartung. Andererseits setzt dies ein unkompliziertes Gleiten der Stückgüter 4 auf der Gleitleiste voraus, da das Stückgut 4 so einzig durch die Zuführförderstrecke 6 entlang der Zuführförderrichtung 106 transportiert wird. Wenn das Stückgut 4 nicht gut gleitet, kann es unter Umständen leichter an einer Störkontur hängen bleiben, was die stabile Dreipunktlage gefährdet, so dass das Stückgut 4 eventuell abkippt, während es noch mit nicht vernachlässigbarem Ausmaß auf der Zuführförderstrecke 6 aufliegt.

Figur 4 zeigt das Fördersystem 2 von Figur 3 mit abgekippten Stückgut 4 gemäß einer weiteren Ausführungsform der Erfindung. Das Stückgut 4 kippt dann plötzlich ab, wenn der Auflagepunkt 20' nicht mehr auf der Zuführstrecke 6 aufliegt und somit keine stabile Dreipunktlage das Stückgut 4 mehr auf der Zuführförderebene 26 hält. Das Abkippen des Stückguts 4 ist eine Bewegung um eine in der Abkippvorrichtung 28 liegende Drehachse. Das abgekippte Stückgut 4 liegt auf der Abkippvorrichtung 28 der Führungsvorrichtung 18 sowie auf der Einschleusförderstrecke 8, so dass ein abrupter Wechsel der auf das Stückgut 4 wirkenden Förderrichtungen 106, 108 auftritt und keine wesentliche Veränderung der Ausrichtung durch gleichzeitig wirkende Förderrichtungen 106, 108 auftreten kann. Das Verziehen durch die verbleibende Bewegungskomponente in Zuführförderrichtung 106, da das Stückgut 4 vor dem Abkippen noch in Bewegung war, ist vernachlässigbar. Die Einschleusförderstrecke 8 wird über Reibung auf der gesamten Länge des Stückguts 4 von der Führungsvorrichtung 18 abgezogen.

Im Anschluss an die in Figur 4 dargestellte Situation wird das Stückgut 4 zunächst nur mit einer Kante auf der Einschleusförderstrecke 8 aufliegend in der zeichnerischen Darstellung nach links entlang der Einschleusförderrichtung 108 transportiert, zunächst noch mit einer Kante auf der Abkippvorrichtung 8 aufliegend, bis es auf der Einschleusförderstrecke 8 komplett aufliegt. Bei einer Ausgestaltung der Auflagefläche 30 als Antriebsmittel, beispielsweise als Transportband, würde das Stückgut 4 nach dem Abkippen noch auf die aufliegende Kante eine Kraftübertragung auf das Stückgut 4 erfolgen. Auch wenn diese Kraftübertragung aufgrund der geringen Auflagefläche nicht sehr effizient wäre, würde dies doch ein Verziehen des Stückguts 4 begünstigen. Daher ist in diesem Fall die Existenz einer Abkippvorrichtung 28 besonders vorteilhaft. Aber auch eine eckig oder streifig ausgestaltete Abkippvorrichtung 28 erfüllt den Zweck, dass das Stückgut 4 möglichst abrupt nicht mehr entlang der Zuführförderrichtung 106 transportiert wird. Entscheidend ist einzig eine Anordnung am der Einschleusförderrichtung 108 zugewandten Rand der Führungsvorrichtung 18 auf Höhe der Zuführförderebene 26. Eine abgerundete Ausgestaltung der Abkippvorrichtung 28 ermöglicht jedoch ein besonders güterschonendes Abkippen im Vergleich zu einem Abkippen an einer eckigen Abkippkante.

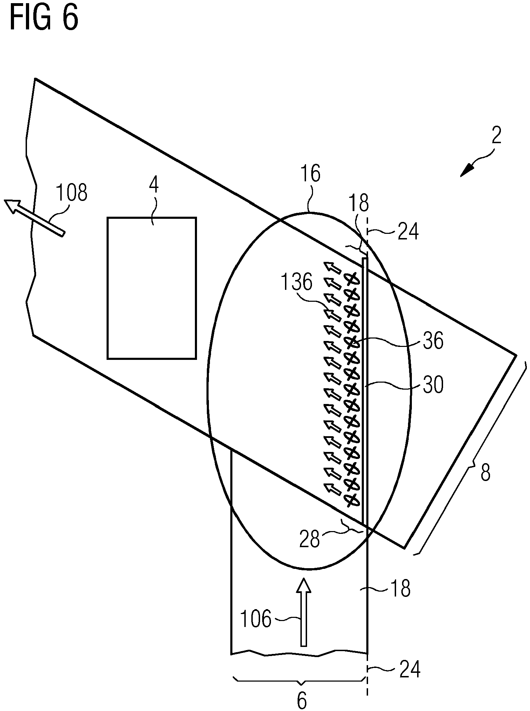

Figur 6 zeigt ein Fördersystem 2 gemäß einer weiteren Ausführungsform der Erfindung. Die Führungsvorrichtung 18 umfasst wie in den vorangehenden Ausführungsformen eine Auflagevorrichtung 30 und eine Abkippvorrichtung 28. Die Abkippvorrichtung 28 ist als eine Serie von Transportrollen 36 ausgestaltet, deren obere Mantelflächen leicht unterhalb der Auflagevorrichtung 30 angeordnet sind. Damit diese Transportrollen 36 dem Stückgut 4 beim Abziehen durch die Einschleusförderstrecke 8 keine andere Richtung als die Einschleusförderrichtung 108 geben, muss die Achse jeder Rolle parallel zu den Wellenachsen der Einschleusförderstrecke 8 sein, die Transportrollenförderrichtung 136 ist die Laufrichtung der Transportrollen 36 und stimmt mit der Einschleusförderrichtung 108 überein. Damit während des Aufliegens des Stückguts 4 auf der Auflagevorrichtung 30 beim Transport entlang der Zuführförderrichtung 106 kein Kontakt zwischen Stückgut 4 und den Transportrollen 36 der Abkippvorrichtung 28 besteht, ist die Abkippvorrichtung 28 in diesem Fall leicht unterhalb der Auflagevorrichtung 30 bzw. unterhalb der Zuführförderstrecke 6 angeordnet. Die Oberfläche der Transportrollen 36 kann abgerundet, beispielsweise ballig, ausgestaltet sein, wodurch beim Kontakt zwischen Transportrolle 36 und Stückgut 4 geringere Kantenbelastungen auftreten. Die Transportrollen 36 erleichtern ein Abziehen des auf der Abkippvorrichtung 28 und auf der Einschleusförderstrecke 8 aufliegenden Stückguts 4 entlang der Einschleusförderrichtung 108 erheblich. Bereits passiv mitlaufende Transportrollen 36 erfüllen ihren Zweck, unter Umständen kann jedoch auch ein aktives Antreiben der Transportrollen 36 sinnvoll sein.

### Bezugszeichenliste

- 2: Fördersystem
- 4: Stückgut
- 6: Zuführförderstrecke
- 8: Einschleusförderstrecke
- 10: Zielförderstrecke
- 12: Trageeinheit
- 16: Übergabebereich
- 18: Führungsvorrichtung
- 20: Auflagepunkt
- 22: Streifenförderband
- 24: Referenzkante
- 26: Zuführförderebene
- 28: Abkippvorrichtung
- 30: Auflagevorrichtung
- 32: Einschleusförderebene
- 34: Führungsvorrichtungskörper
- 36: Transportrolle
- 106: Zuführförderrichtung
- 108: Einschleusförderrichtung
- 110: Zielförderrichtung
- 136: Transportrollenförderrichtung

## Patentansprüche

1. Fördersystem (2) zum kontrollierten Übergeben von einem Stückgut (4), beispielsweise einer Postsendung, von einer Zuführförderstrecke (6) auf eine Einschleusförderstrecke (8), wobei
- die Zuführförderstrecke (6) innerhalb eines Übergabebereichs (16) in einem Winkel in die Einschleusförderstrecke (8) mündet und oberhalb der Einschleusförderstrecke (8) angeordnet ist;
- die Zuführförderstrecke (6) eine Zuführförderrichtung (106) und die Einschleusförderstrecke (8) eine Einschleusförderrichtung (108) aufweist;
**dadurch gekennzeichnet, dass**
eine Führungsvorrichtung (18) umfasst ist, welche als Auflage für eine Seite entlang einer Kante des Stückguts (4) ausgestaltet ist und in ihrer Länge im Wesentlichen entlang der Zuführförderrichtung (106) ausgerichtet ist und oberhalb der Einschleusförderstrecke (8), auf einer der Einschleusförderrichtung (108) abgewandten Seite des Übergabebereichs (16) angeordnet ist.

2. Fördersystem (2) nach Anspruch 1, **dadurch gekennzeichnet, dass**
die Führungsvorrichtung (18) auf Höhe oder unterhalb der Zuführförderstrecke (6) angeordnet ist.

3. Fördersystem (2) nach einem der Ansprüche 1 bis 2, **dadurch gekennzeichnet, dass**
die Zuführförderstrecke (6) und die Führungsvorrichtung (18) ausgestaltet sind, das Stückgut (4) oberhalb der Einschleusförderstrecke (8) zu tragen, während es zumindest noch teilweise auf der Zuführförderstrecke (6) aufliegend entlang der Zuführförderrichtung (106) transportiert wird.

4. Fördersystem (2) nach einem der Ansprüche 1 bis 3, **dadurch gekennzeichnet, dass**
die Führungsvorrichtung (18) auf ihrer der Einschleusförderrichtung (108) zugewandten Seite eine Abkippvorrichtung (28) umfasst.

5. Fördersystem (2) nach Anspruch 4, **dadurch gekennzeichnet, dass**
die Abkippvorrichtung (28) abgerundet ausgestaltet ist.

6. Fördersystem (2) nach einem der Ansprüche 4 5, **dadurch gekennzeichnet, dass**
die Abkippvorrichtung (28) Transportrollen (36) umfasst, die mit einer Laufrichtung entlang der Einschleusförderrichtung (108) angeordnet sind.

7. Fördersystem (2) nach einem der Ansprüche 1 bis 6, **dadurch gekennzeichnet, dass**
die Führungsvorrichtung (18) eine statische Gleitleiste umfasst.

8. Fördersystem (2) nach einem der Ansprüche 1 bis 7, **dadurch gekennzeichnet, dass**
die Führungsvorrichtung (18) ein entlang der Zuführförderrichtung (106) antreibbares Antriebsmittel, beispielsweise ein Transportband, umfasst.

9. Fördersystem (2) nach einem der Ansprüche 1 bis 8, **dadurch gekennzeichnet, dass**
die Führungsvorrichtung (18) auf ihrer der Einschleusförderrichtung (108) abgewandten Seite einen orthogonal zu Einschleusförderrichtung (108) und Zuführförderrichtung (106) angeordneten Führungsanschlag umfasst.

10. Verfahren zum kontrollierten Übergeben eines Stückguts (4) von einer Zuführförderstrecke (6) auf eine Einschleusförderstrecke (8), wobei die eine Zuführförderrichtung (106) aufweisende Zuführförderstrecke (6) innerhalb eines Übergabebereichs (16) in einem Winkel in die eine Einschleusförderrichtung (108) aufweisende Einschleusförderstrecke (8) mündet und innerhalb des Übergabebereichs (16) oberhalb der Einschleusförderstrecke (8) angeordnet ist;
umfassend die Verfahrensschritte:
a) Transportieren eines auf der Zuführförderstrecke (6) aufliegenden Stückguts (4) entlang der Zuführförderrichtung (106) ;
b) Unterstützen des Stückguts (4) auf einer ersten, der Einschleusförderrichtung (108) abgewandten Seite an zwei oder mehr Punkten und auf einer der Einschleusförderrichtung (108) zugewandten Seite an mindestens einem Punkt während des Transportierens entlang der Zuführförderrichtung (106); und
c) Transportieren des zumindest teilweise oberhalb der Einschleusförderstrecke (8) positionierten Stückguts (4) entlang der Zuführförderrichtung (106).

11. Verfahren nach Anspruch 10, zudem umfassend die Verfahrensschritte
a) Abkippen des Stückguts (4) um eine parallel zur Zuführförderrichtung (106) und oberhalb der Einschleusförderstrecke (8) angeordnete Drehachse;
b) Transportieren des Stückguts (4) entlang der Einschleusförderrichtung (108) auf der Einschleusförderstrecke (8).

12. Verfahren nach einem der Ansprüche 10 bis 11, **dadurch gekennzeichnet, dass**
das Fördersystem (2) eine auf Höhe der Zuführförderstrecke (6) oder oberhalb der Einschleusförderstrecke (8) positionierte Führungsvorrichtung (18) zum Unterstützen des Stückguts (4) auf seiner ersten, der Einschleusförderrichtung (108) abgewandten Seite an zwei oder mehr Punkten umfasst, welche in ihrer Länge im Wesentlichen entlang der Zuführförderrichtung (106) ausgerichtet ist und oberhalb der Einschleusförderstrecke (8), auf einer der Einschleusförderrichtung (108) abgewandten Seite des Übergabebereichs (16) angeordnet ist.

13. Verfahren nach einem der Ansprüche 10 bis 12, **dadurch gekennzeichnet, dass**
die Führungsvorrichtung (18) auf ihrer der Einschleusförderrichtung (108) zugewandten Seite eine Abkippvorrichtung (28) umfasst.

14. Verfahren nach einem der Ansprüche 10 bis 13, **dadurch gekennzeichnet, dass**
das Stückgut (4) aktiv durch die Führungsvorrichtung (18) entlang der Zuführförderrichtung (106) transportiert wird.

15. Verfahren nach einem der Ansprüche 10 bis 14, **dadurch gekennzeichnet, dass**
das Stückgut (4) auf der Führungsvorrichtung (18) entlang der Zuführförderrichtung (106) gleitet.
